# EUROPEAN PATENT SPECIFICATION

(11) **EP 4 642 853 B1**
(45) Date of publication and mention of the grant of the patent: **04.11.2026**
(21) Application number: 23833731.5
(22) Date of filing: 18.12.2023
(51) Int. Cl.: C08L 69/00, C08L 67/02, C08G 63/199, C08G 64/06

(54) **POLYCARBONATE COMPOSITION**
POLYCARBONAT-ZUSAMMENSETZUNG
COMPOSITION DE POLYCARBONATE

(30) Priority: 30.12.2022 WO PCT/CN2022/143725; 07.02.2023 EP 23155279
(43) Date of publication of application: 05.11.2025
(73) Proprietor: Covestro Deutschland AG, 51373 Leverkusen (DE)
(72) Inventor: GU, Kevin, Shanghai, 200137 (CN); SHEN, Dake, Shanghai, 200126 (CN); WANG, George, Shanghai, 200123 (CN)
(74) Representative: Levpat
(86) International application number: PCT/EP2023/086237
(87) International publication number: WO 2024/141296

(56) References cited:
- WO-A1-2022/228952
- US-A1- 2002 111 428

## Description

### TECHNICAL FIELD

The present invention relates to a polycarbonate composition. In addition, the present invention also relates to shaped articles made from the polycarbonate composition.

### BACKGROUND ART

Displays have been used in many places of the automotive interior which require a seamless integration of the displays to different materials and structures. From large, curved displays to fully functional smart surfaces and personalized lighting to re-imagined flooring, materials are an enabler of this mobility evolution. The shape of display cover will be 3-dimensional and the product structure will be very complex.

In comparison with traditional glass materials, polycarbonate (PC) has advantages regarding design freedom, component & function integration and impact resistance. However, the high birefringence of polycarbonate is a main technical challenge for the application. Residual birefringence of polycarbonate after injection molding create rainbow-like color spectrum on display cover. The rainbow-like color spectrum can be visible under polarized light. The color spectrum can be mitigated by injection compress molding and an annealing process, but it cannot totally be removed at the corners of display covers where the internal stress is strong. Thus it is highly needed from the market to develop a new polycarbonate blended material that has lower birefringence and keep the polycarbonate's advantages mentioned above.

In an anisotropic material, the refractive index differs depending on the direction of the electric field vector of light. The difference in the refractive index between the principal axes is called birefringence. The birefringence dependents on the inherent polymer structure and the orientation of polymer chains. During the molding process of a polymer, the melt resin flows and is fast cooled, the polymer chains are oriented, thus flow stresses and birefringence are not completely relaxed and remain residual in molded parts. This is often called flow-induced or froze-in birefringence. The polarized light passing through deformed polycarbonate article splits into two wave components, which travel at different velocities, and parallel to a direction of principal stress but perpendicular to each other. These two components of the light waves passing through the sample interfere with each other to produce a color spectrum. This is the origin of the rainbow-like patten issue for display covers.

US20020111428A discloses transparent polycarbonate polyester compositions which comprise a resin blend of polycarbonate and a cycloaliphatic polyester resin, and an impact modifying amorphous resin having a refractive index from about 1.51 to about 1.58 to improve ductility, chemical resistance and melt flow properties. However, these compositions could not achieve low birefringence for display applications.

US6465102B discloses a molded article comprising a decorative film or substrate, and an adjacent injection molded polymeric base comprising substantially transparent cycloaliphatic polyester resin and a substantially transparent impact modifier with a refractive index from 1.51-1.58. The molded article have high clarity with a light transmittance of more than 75% and improved chemical resistance. However, this molded article could not achieve low birefringence for display applications.

Thus, there is still a need to develop molded articles with a good combination of high transmittance (more than 85%), low haze and low birefringence for the applications of display covers.

### SUMMARY OF THE INVENTION

One objective of the present application is thus to provide a polycarbonate composition, a molded article made from which has a good combination of high light transmittance, low haze and low birefringence.

Another object of the present application is to provide a molded article which has a good combination of high light transmittance, low haze and low birefringence.

In a first aspect, the present invention provides a polycarbonate composition comprising the following components, relative to the total weight of the composition:
A) 0-76 wt.% of a copolycarbonate (CoPC) containing bis(4-hydroxyphenyl)-3,3,5-trimethylcyclohexane (BPTMC) units and substituted or unsubstituted bisphenol units,
B) 0-58 wt.% of an aromatic linear homopolycarbonate comprising substituted or unsubstituted bisphenol units,
C) 15-52 wt.% of poly(1,4-cyclohexylenedimethylene 1,4-cyclohexanedicarboxylate)(PCCD), and
D) 1-60 wt.% of methyl methacrylate -n-butyl acrylate -butadiene - styrene copolymer (MBABS),
wherein the content relationship index (r) of components A-D, having the following formula (A): $r = {\left(\frac{1.585 ∗ \left({C}_{A + B}-0.000163∗{BPTMC%}_{A}∗{C}_{A}\right) + 1.507 ∗ {C}_{C}}{1.5445 ∗ {C}_{A + B + C}}-1\right)}^{2} ∗ {c}_{D} ∗ {10}^{6}$ (A) is in a range of 0-32,
in formula (A),
C_{A} indicates the content of component A in the composition,
C_{A+B} indicates the total content of components A and B in the composition, which is from 22 wt% to 76 wt%,
BPTMC%_{A} indicates the content of bis(4-hydroxyphenyl)-3,3,5-trimethylcyclohexane (BPTMC) units in component A,
C_{C} indicate the content of component C in the composition,
C_{A+B+C} indicates the total content of components A, B, and
   C in the composition,
C_{D} indicate the content of component D in the composition,
all contents are weight percentage.

The inventors have discovered unexpectedly that molded articles made from the composition according to the present invention has a high light transmittance (greater than 85%), a low haze (lower than 5%) at 2 mm as determined according to ASTM method D1003, and a low birefringence.

In a second aspect, the present invention provides a shaped article made from a polycarbonate composition according to the first aspect of the present invention.

In a third aspect, the present invention provides a process for preparing the shaped article mentioned above, comprising injection moulding, extrusion moulding, blow moulding or thermoforming the polycarbonate composition of the present invention.

Other subjects and characteristics, aspects and advantages of the present invention will emerge even more clearly on reading the description and the examples that follow.

### BRIEF DESCRIPTION OF THE DRAWINGS

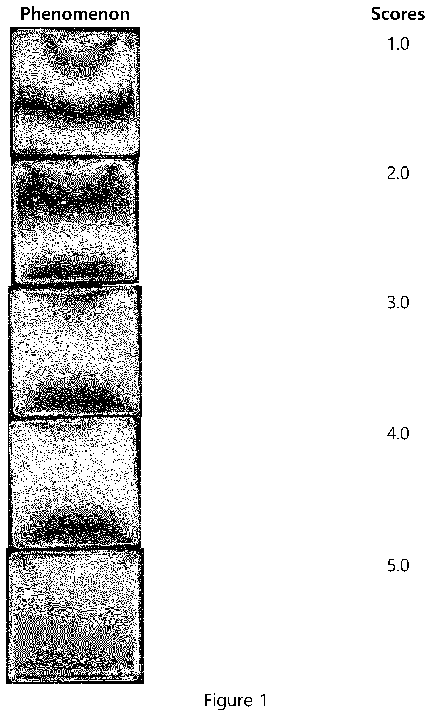

The present invention will be described and explained in detail in conjunction with the drawings hereinafter, wherein
Fig. 1 shows the corresponding scores of different birefringence phenomenon.

### DETAILED DESCRIPTION OF THE INVENTION

In that which follows and unless otherwise indicated, the limits of a range of values are included within this range, in particular in the expressions "between ... and ..." and "from ... to ...".

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Throughout the instant application, the term "comprising" is to be interpreted as encompassing all specifically mentioned features as well optional, additional, unspecified ones. As used herein, the use of the term "comprising" also discloses the embodiment wherein no features other than the specifically mentioned features are present (*i.e.* "consisting of").

Unless otherwise specified, all numerical values expressing amount of ingredients and the like which are used in the description and claims are to be understood as being modified by the term "about".

As used in herein, "light transmittance" can be interchanged with light transmission.

### Component A

According to the first aspect, the polycarbonate composition according to the present invention comprises a copolycarbonate.

In the present application, the copolycarbonate refers to the polycarbonate comprising
i) bis(4-hydroxyphenyl)-3,3,5-trimethylcyclohexane (BPTMC) units of formula (1) 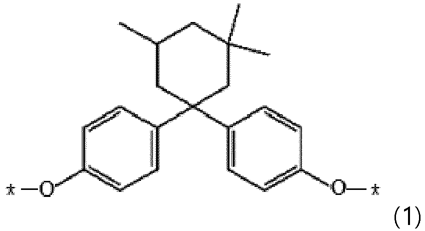 wherein * indicates the position where formula (1) is connected to the polymer chain, i.e., the BPTMC unit of formula (1) is derived from bis(4-hydroxyphenyl)-3,3,5-trimethylcyclohexane (BPTMC) having the formula (1a): 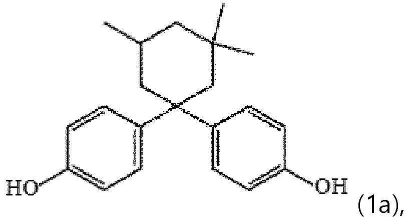 and
ii) substituted or unsubstituted bisphenol units of formula (2): 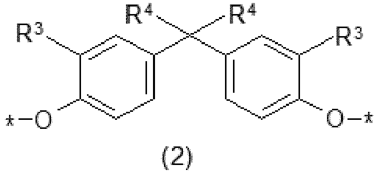
wherein
* indicates the position where formula (2) is connected to the polymer chain, R³, each independently, is H, linear or branched C₁-C₁₀ alkyl, preferably, H, linear or branched C₁-C₄ alkyl, and
R⁴, each independently, is linear or branched C₁-C₁₀ alkyl, preferably linear or branched C₁-C₄ alkyl.

The units of formula (2) can be derived from a diphenol of formula (2'): 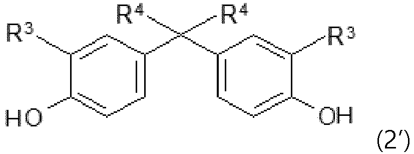 wherein
R³, each independently, represents H, linear or branched C₁-C₁₀ alkyl,
R⁴, each independently, represents linear or branched C₁-C₁₀ alkyl.

Preferably, the unit of formula (2) has the following formula (2a), 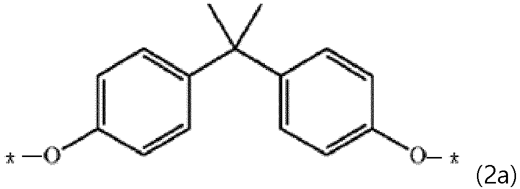
wherein * indicates the position where formula (2a) is connected to the polymer chain,
i.e., the unit of formula (2) is derived from bisphenol A, i.e. the diphenol of formula (2'a).

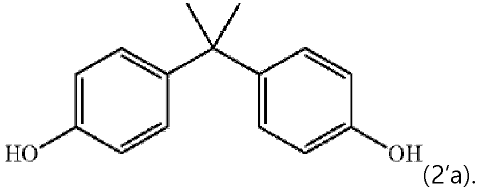

Preferably, the copolycarbonate comprises units derived from bis(4-hydroxyphenyl)-3,3,5-trimethylcyclohexane (BPTMC) and bisphenol A.

Preferably, the units of formula (1) in the copolycarbonate are derived from bis(4-hydroxyphenyl)-3,3,5-trimethylcyclohexane (BPTMC) and the units of formula (2) in the copolycarbonate are derived from bisphenol A.

The diphenols of formula (1) and formula (2') are known and can be prepared by processes known from literatures (for example H. J. Buysch et al., Ullmann's Encyclopedia of Industrial Chemistry, VCH, New York 1991, 5th Ed., Vol. 19, p. 348).

Preferably, the mole content of the units of the formula (1) in the copolycarbonate is 20 - 80 mol %, the mole content of the units of the formula (2) in the copolycarbonate is 80 - 20 mol %, based on the total mole number of units of formula (1) and formula (2).

More preferably, the mole content of the units of the formula (1) in the copolycarbonate is 30 - 75 mol %, the mole content of the units of the formula (2) in the copolycarbonate is 70 - 25 mol %, based on the total mole number of units of formula (1) and formula (2).

The copolycarbonate used in the composition according to the present invention is commercially available or can be produced by a process known in the art.

For example, the copolycarbonate used in the composition according to the present invention can be produced by an interfacial process. In particular, the diphenols of the formula (1) and (2') and optional branching agents are dissolved in aqueous alkaline solution and reacted with a carbonate source, such as phosgene, optionally dissolved in a solvent, in a two-phase mixture comprising an aqueous alkaline solution, an organic solvent and a catalyst, preferably an amine compound. The reaction procedure can also be conducted in a multistep process.

Such processes for the preparation of copolycarbonate are known in principle as two-phase interfacial processes, for example from H. Schnell, Chemistry and Physics of Polycarbonates, Polymer Reviews, Vol. 9, Interscience Publishers, New York 1964, page 33 et seq., and on Polymer Reviews, Vol. 10, "Condensation Polymers by Interfacial and Solution Methods", Paul W. Morgan, Interscience Publishers, New York 1965, Chapter VIII, page 325, and the underlying conditions are therefore familiar to the person skilled in the art.

The concentration of the diphenols in the aqueous alkaline solution is from 2 wt. % to 25 wt. %, preferably from 2 wt. % to 20 wt. %, more preferably from 2 wt. % to 18 wt. % and even more preferably from 3 wt. % to 15 wt. %. The aqueous alkaline solution consists of water in which hydroxides of alkali metals or alkaline earth metals are dissolved. Sodium and potassium hydroxides are preferred.

The concentration of the amine compound is from 0.1 mol % to 10 mol %, preferably 0.2 mol % to 8 mol %, particularly preferably 0.3 mol % to 6 mol % and more particularly preferably 0.4 mol % to 5 mol %, relative to the mole amount of diphenol used.

The carbonate source is phosgene, diphosgene or triphosgene, preferably phosgene. Where phosgene is used, a solvent may optionally be dispensed with and the phosgene may be passed directly into the reaction mixture.

Tertiary amines, such as triethylamine or N-alkylpiperidines, may be used as a catalyst. Suitable catalysts are trialkylamines and 4-(dimethylamino)pyridine. Triethylamine, tripropylamine, triisopropylamine, tributylamine, trisobutylamine, N-methylpiperidine, N-ethylpiperidine and N-propylpiperidine are particularly suitable.

Halogenated hydrocarbons, such as methylene chloride, chlorobenzene, dichlorobenzene, trichlorobenzene or mixtures thereof, or aromatic hydrocarbons, such as, toluene or xylenes, are suitable as an organic solvent. The reaction temperature may be from -5 °C. to 100 °C, preferably from 0 °C to 80°C, particularly preferably from 10 °C to 70 °C. and very particularly preferably from 10 °C. to 60 °C. The preparation of the copolycarbonates by the melt transesterification process, in which the diphenols are reacted with diaryl carbonates, generally diphenyl carbonate, in the presence of catalysts, such as alkali metal salts, ammonium or phosphonium compounds, in the melt, is also possible.

The melt transesterification process is described, for example, in Encyclopedia of Polymer Science, Vol. 10 (1969), Chemistry and Physics of Polycarbonates, Polymer Reviews, H. Schnell, Vol. 9, John Wiley and Sons, Inc. (1964), and DE-C 1031 512.

In the transesterification process the aromatic dihydroxy compounds already described in the case of the phase boundary process are transesterified with carbonic acid diesters with the aid of suitable catalysts and optionally further additives in the melt.

The reaction of the aromatic dihydroxy compound and of the carbonic acid diester to give the copolycarbonate can be carried out batchwise or preferably continuously, for example in stirred vessels, thin-film evaporators, falling-film evaporators, stirred vessel cascades, extruders, kneaders, simple disc reactors and high-viscosity disc reactors.

Preferably, the copolycarbonate is selected from block copolycarbonates and random copolycarbonates. More preferably, the copolycarbonate is selected from random copolycarbonates.

Advantageously, the copolycarbonate has a weight average molecular weight (Mw) ranging from 16000 g/mol to 40000 g/mol, preferably from 17000 g/mol to 32000 g/mol, as determined by Gel Permeation Chromatography (GPC) in methylene chloride at 25°C using a polycarbonate standard with an UV-IR detector.

As an example for commercial products of the copolycarbonate suitable for the composition according to the present invention, mention can be made of the products sold under the name APEC^{®} by the company Covestro Polymer (China), which are polycarbonate copolymers made from the copolymerization of carbonyl chloride with bisphenol A (BPA) and 3,3,5-trimethy1-1,1-bis(4-hydroxyphenyl) cyclohexane (BPTMC).

Advantageously, the copolycarbonate is present in the composition of the present invention in an amount ranging from 0 wt. % to 76 wt. %, more preferably from 5 wt. % to 60 wt. %, even more preferably from 7 wt. % to 50 wt. %, relative to the total weight of the composition.

### Component B

According to the first aspect, the polycarbonate composition according to the present invention comprises an aromatic linear homopolycarbonate comprising substituted or unsubstituted bisphenol units.

In the present application, the homopolycarbonate refers to the polycarbonate comprising units of formula (2) as defined above.

The unit of formula (2) is derived from a diphenol of formula (2'): 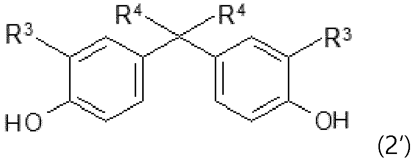 wherein
R³, each independently, represents H, linear or branched C₁-C₁₀ alkyl, preferably linear or branched C₁-C₆-alkyl, more preferably linear or branched C₁-C₄ alkyl, even more preferably H or methyl, and
R⁴, each independently, represents linear or branched C₁-C₁₀ alkyl, preferably linear or branched C₁-C₆ alkyl, more preferably linear or branched C₁-C₄-alkyl, even more preferably methyl.

Preferably, the unit of formula (2) is derived from the diphenol of formula (2'a), i.e. bisphenol A.

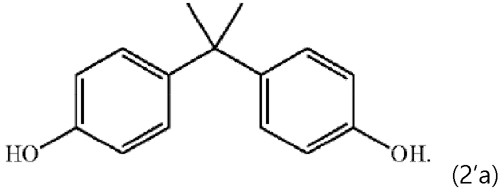

The homopolycarbonate used in the composition according to the present invention is commercially available or can be produced by a process known in the art.

For example, the homopolycarbonate can be produced by referring to the preparation process described with respect to component A.

Advantageously, the homopolycarbonate has a weight average molecular weight (Mw) ranging from 20,000 g/mol to 32,000 g/mol, preferably from 20,000 g/mol to 30,000 g/mol, as determined by Gel Permeation Chromatography (GPC) in methylene chloride at 25°C using a polycarbonate standard with an UV-IR detector.

As commercial products of homopolycarbonates suitable for use in the composition according to the present invention, mention can be made of Makrolon^{®} FS2000,Makrolon^{®} 2400, Makrolon^{®} 2600, and Makrolon^{®} 2800 sold by the company Covestro Polymer (China).

Advantageously, the homopolycarbonate is present in the polycarbonate composition of the present invention in an amount ranging from 0 wt. % to 60 wt. %, preferably from 14 wt. % to 60 wt. %, more preferably from 14 wt. % to 58 wt. %, relative to the total weight of the composition.

### Component C

According to the first aspect, the polycarbonate composition according to the present invention comprises poly(1,4-cyclohexylenedimethylene 1,4-cyclohexanedicarboxylate) (PCCD), also sometimes referred to as poly(1,4-cyclohexenedimethanol-1,4-dicarboxylate), which is a cycloaliphatic polyester and has recurring units of the following formula: 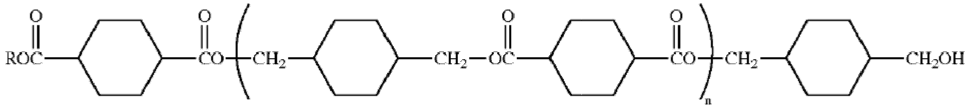 R is derived from 1,4-cyclohexane dimethanol,

The cycloaliphatic polyester is condensation products of cycloaliphatic diacids, or chemical equivalents and cycloaliphatic diols, or chemical equivalents. The preferred PCCD has a *cis*/*trans* formula.

The polyester polymerization reaction is generally run in the melt in the presence of a suitable catalyst such as a tetrakis (2-ethyl hexyl) titanate, in a suitable amount, typically about 50 to 200 ppm of titanium based upon the final product.

The cyclic components assist by imparting good rigidity to the polyester and to allow the formation of transparent blends due to favorable interaction with the polycarbonate resin.

PCCD employed can be a standard PCCD available as NEOSTAR COPOLYESTER from Eastman Chemical.

Preferably, PCCD has a weight average molecular weight of 30,000 to 80,000, preferably 41,000 to 60,000 as determined by GPC performed on a Perkin-Elmer instrument using 3% isopropanol/chloroform eluent and a refractive index of about 1.506-1.508 as determined in accordance to ISO 489 with an Abbe Refractometer at the Sodium-D-Line (of wavelength 589nm).

The refractive index of the miscible resin blend is determined by the components and the amounts of each. The refractive index of pure polycarbonate (PC) is 1.585 while that of PCCD is 1.506-1.508. Thus the refractive index of the mixture of the two components may be controlled between the upper and lower limits of their respective indices of refraction.

Advantageously, the PCCD is present in the polycarbonate composition according to the present invention in an amount ranging from 15 wt.% to 52 wt.%, preferably from 18 wt.% to 52 wt.%, relative to the total weight of the polycarbonate composition.

### Component D

According to the first aspect, the polycarbonate composition according to the present invention comprises methyl methacrylate -n-butyl acrylate - butadiene-styrene (MBABS) copolymer, which is an amorphous impact modifier copolymer resin.

The MBABS copolymer comprises from 1 to 15 wt.% of a dispersed phase made of a rubber-like elastic material and from 99 to 85 wt.% of a continuous phase made of a polymer comprising from 35 to 75 wt. % of styrene units and from 65 to 25 wt. % of a combination of methyl methacrylate units and n-butyl acrylate units, wherein the weight ratio of methyl methacrylate units to n-butyl acrylate units is 6:1 to 7:1, the elastic material is a styrene-butadiene block copolymer comprising from 30 to 50 wt. % of styrene monomer units and from 70 to 50 wt. % of butadiene monomer units.

Preferably, the weight ratio of the styrene units to the total units of methyl methacrylate and n-butyl acrylate is 42:58-59:41 in the continuous phase.

Preferably, the weight average molecular weight (Mw) of the polystyrene portions of the styrene-butadiene block copolymer is from 45,000 to 75,000 determined by GPC performed on a Perkin-Elmer instrument using 3% isopropa-nol/chloroform eluent, and the ratio (Mw/Mn) of Mw to the number-average molecular weight (Mn) of the styrene-butadiene block copolymer is from 1.20 to 1.80.

The MBABS copolymer is produced by copolymerizing a monomer mixture comprising a styrene monomer, a methyl methacrylate and n-butyl acrylate in the presence of a styrene-butadiene block copolymer.

The amorphous MBABS copolymer is produced by copolymerizing a monomer mixture comprising styrene, methyl methacrylate and n-butyl acrylate in the presence of an elastic material of styrene-butadiene block copolymer.

With the addition of amorphous impact modifiers such as MBABS to PC/PCCD compositions, molded parts with high light transmissions, low haze values, and even low birefringence were obtained.

Although the MBABS copolymer is a transparent material with a light transmittance of 90% and a haze of 2.5%, the addition of MBABS to PC/PCCD blends may decrease the transparency of the whole blend. In order to achieve the high transparency of the whole composition of the present invention, the contents of PC and PCCD as well as the content of MBABS need to be adjusted so that the refractive index of PC/ PCCD blends can match well with that of MBABS, that is, when their refractive indexes are close enough, then the whole composition can achieve a high transmittance and a low haze.

The inventors have discovered that when the content relationship index (r) of components A-D in the composition of the present invention, which is defined according to the following formula (A): $r = {\left(\frac{1.585 ∗ \left({C}_{A + B}-0.000163∗{BPTMC%}_{A}∗{C}_{A}\right) + 1.507 ∗ {C}_{C}}{1.5445 ∗ {C}_{A + B + C}}-1\right)}^{2} ∗ {c}_{D} ∗ {10}^{6}$ (A) wherein,
C_{A} indicates the content of component A in the composition,
C_{A+B} indicates the total content of components A and B in the composition, which is from 22 wt. % to 76 wt.% $BPTMC % = {BPTMC%}_{A} ∗ \frac{{C}_{A}}{{C}_{A + B}}$
BPTMC%_{A} indicates the content of BPTMC units in component A in the composition,
C_{C} indicate the content of component C in the composition,
C_{A+B+C} indicates the total content of components A, B, and C in the composition,
C_{D} indicate the content of component D in the composition,
all contents are weight percentage,
is in a range of 0-32, the molded parts made from the polycarbonate composition of the present invention are transparent and have desired properties suitable for applications where high light transmission, low haze, and low birefringence are desired.

Advantageously, the MBABS is present in the polycarbonate composition of the present invention in an amount ranging from 1 wt.% to 60 wt.%, preferably from 3 wt.% to 50 wt.%, more preferably from 3 wt.% to 40 wt.%, relative to the total weight of the polycarbonate composition.

Advantageously, the total amount of the components A-D is up to 98 wt. %, preferably up 98.5 wt. %, more preferably up to 99 wt.%, relative to the total weight of the polycarbonate composition according to the present invention.

### Other components

In addition to components A-D mentioned above, the polycarbonate compositions according to the present invention can optionally comprise one or more additives conventionally used in polycarbonate compositions. Such additives are, for example, UV stabilizers, IR stabilizers, heat stabilizers, antistatic agents, colorants, lubricants, demoulding agents (such as pentae-rythrityl tetrastearate), antioxidants, flow improvers agents, anti-dripping agents (such as poly(tetrafluoroethylene)), etc.

Such additives are described, for example, in WO 99/55772, pages 15-25, and in "Plastics Additives", R. Gachter and H. Muller, Hanser Publishers 1983).

The person skilled in the art can select the type of the additives so as not to adversely affect the desired properties of the polycarbonate composition according to the present invention.

Advantageously, the total amount of the additives is up to 2 wt. %, preferably up 1.5 wt. %, more preferably up to 1 wt.%, relative to the total weight of the polycarbonate composition according to the present invention.

### Preparation of the polycarbonate composition

The polycarbonate composition according to the present invention can be in the form of, for example, pellets.

The polycarbonate composition according to the present invention demonstrates a good processing behaviour and can be prepared by a variety of methods. For example, the materials contained in the composition of the present invention are fed into the throat of a twin-screw extruder via a hopper. Alternatively, at least one of the components can be incorporated into the composition by feeding it directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets can be one-fourth inch long or less as desired. Such pellets can be used for subsequent molding, shaping or forming.

Melt blending methods are preferred due to the availability of melt blending equipment in commercial polymer processing facilities.

Illustrative examples of equipment used in such melt processing methods include co-rotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 230 °C and 320 °C in the molten resin composition, although higher temperatures can be used provided that the residence time of the resin in the processing equipment is kept short.

In some cases, the melting composition exits from a processing equipment such as an extruder through small exit holes in a die. The resulting strands of the molten resin are cooled by passing the strands through a water bath. The cooled strands can be chopped into small pellets or other suitable shapes for packaging and further handling.

### Shaped articles

The polycarbonate compositions according to the present invention can be used, for example for the production of various types of transparent shaped articles.

In the second aspect, the present invention also provides a shaped article made from a polycarbonate composition according to the first aspect of the present invention.

As examples of such shaped articles, mention can be made of, for example, films; profiles; housing parts, sheets; tubes; lenses, display covers (automotive interior applications); electrical and electronic housings.

### Preparation of shaped articles

The polycarbonate compositions according to the present invention can be processed into transparent shaped articles by a variety of means such as injection moulding, extrusion moulding, blow moulding or thermoforming to form shaped articles.

In the third aspect, the present invention provides a process for preparing the shaped article made from a composition according to the first aspect of the present invention, comprising injection moulding, extrusion moulding, blow moulding or thermoforming the polycarbonate composition according to the present invention.

### Examples

The present invention will be illustrated in detail below with reference to the examples below. The examples are only for the purpose of illustration, rather than limiting the scope of the present invention.

### Materials used

### Component A

CoPC-1: a copolycarbonate based on 70 mol % of 3,3,5-trimethy1-1,1-bis(4-hydroxyphenyl)cyclohexane (BPTMC) units and 30 mol % of bisphenol A units, based on the total amount of bisphenol units, with a MVR of 7 cm³/10 min, as measured at 330 °C, 1.2 kg according to ISO 1133: (2011), and a weight average molecular weight of about 30000 g/mol, as determined by means of Gel Permeation Chromatography (GPC) in methylene chloride at 25 °C using a polycarbonate standard, commercially available from the company Covestro Polymer (China) Co., Ltd.

CoPC-2: a copolycarbonate based on 47 mol % of 3,3,5-trimethy1-1,1-bis(4-hydroxyphenyl)cyclohexane (BPTMC) units and 53 mol % of bisphenol A units, based on the total amount of bisphenol units, with a MVR of 16 cm³/10 min, as measured at 330 °C, 1.2 kg according to ISO 1133: 2011, and a weight average molecular weight of about 27000 g/mol, as determined by means of Gel Permeation Chromatography (GPC) in methylene chloride at 25 °C using a polycarbonate standard, commercially available from the company Covestro Polymer (China) Co., Ltd.

### Component B

PC: commercially available from the company Covestro Polymer (China) Co., Ltd, a linear polycarbonate based on bisphenol A have a weight average molecular weight of 24000 g/mol, as determined by means of Gel Permeation Chromatography (GPC) in methylene chloride at 25 °C using a polycarbonate standard.

### Component C

PCCD: a copolymer of 1,4-cyclohexanedimethanol (CHDM) and 1,4-dimethylcyclohexane dicarboxylate (DMCD), having an inherent viscosity of 0.92 dL/g, as measured in 60/40 (wt/wt) phenol/tetrachloroethane at a concentration of 0.5g/100ml at 25 °C, available as NEOSTAR COPOLYESTER 24303 from Eastman Chemical Company.

### Component D

ABS: available under the trade name P60 from INEOS Styrolution GmbH, a core-shell impact modifier prepared by emulsion polymerization of 58 wt. %, based on the ABS polymer, of a mixture of 24 wt. % of acrylonitrile and 76 wt. % of styrene in the presence of 42 wt. %, based on the ABS polymer, of a linear polybutadiene rubber.

MBS: available under the trade name Kane Ace M732 from Japan Kaneka Chemical Co. Ltd, methyl methacrylate-butadiene-styrene copolymer with a core/shell structure.

MBABS: comprising 50 wt.% of styrene units, 35 wt.% of methyl methacrylate units, 5 wt.% of n-butyl acrylate units, and 10 wt.% of butadiene units, based on the total weight of all units, available under the trade name DENKA Transparent Polymer (TH-21) from Denka Singapore Private. Ltd,

### Other components

H₃PO₃: Phosphorous acid, a heat stabilizer, available from the company Sigma-Aldrich Chemie GmbH.

PETS: Pentaerythritol tetrastearate powder, a mold release agent, available as FACI L348 from the company Faci Asia Pacific Pte Ltd.

Irganox^{®} B900: a mixture of 80% Irgafos^{®} 168 and 20% Irganox^{®} 1076 sold from the company BASF, wherein Irgafos^{®}168 is (tris (2,4-di-tert-butylphenyl)phosphite), Irganox^{®} 1076 is (2,6-di-tert-butyl-4-(octadecanoxy-carbonylethyl)-phenol.

### Test methods

The physical properties of specimens in the examples were tested as follows.

### Vicat softening temperature

The Vicat softening temperature (T_{Vicat}) was determined on test specimens of dimension of 80mm×10mm×4mm according to ISO 306: 2013 with a ram load of 50 N and a heating rate of 120 °C/h with a Coesfeld Eco 2920 instrument from Coesfeld Materialtest.

### Light transmittance and haze

Light transmittance and haze were measured on a 2-mm plaque according to ASTM method D1003: 2013 with an instrument UitraScan Pro. (with a lighting source ofD65 illuminant) from the company HunterLab.

### Birefringence

Birefringence was qualitatively evaluated by viewing molded plates with a thickness of 2 mm under a SV-2000 type polariscope from the company Strainoptics.

Fig. 1 shows the score of the corresponding phenomenon.

A score value of 1 means the strongest rainbow-like pattern and a score value of 5 means the weakest rainbow-like pattern. The stronger the rainbow-like pattern indicates the higher birefringence. Typically a score value of 3.0 is acceptable and a score value of 5 is the best.

### Comparative Examples (CE) 1-6 and Invention Examples (IE) 1-7

The materials listed in Table 1 were compounded on a twin-screw extruder (ZSK-26) (from Coperion, Werner and Pfleiderer) at a speed of rotation of 250 rpm, a throughput of 20 kg/h, and a machine barrel temperature of 250°C-290 °C and granulated.

The granules were processed into corresponding testing specimens on an injection moulding machine (from Arburg) with a melting temperature of 270-290 °C and a mold temperature of 60-80 °C.

The physical properties (including Vicat softening temperature, light transmittance, haze, birefringence level) of the compositions obtained were tested and the results were summarized in Table 1.

**Table 1**

| Components | | CE1 | CE2 | CE3 | CE4 | CE5 | IE1 | IE2 | IE3 | CE6 | IE4 | IE5 | IE6 | IE7 |
|---|---|---|---|---|---|---|---|---|---|---|---|---|---|---|
| A | PC | 100 | 49.58 | 44.58 | 37.58 | 44.58 | 49.08 | 58.00 | 48.08 | 51.08 | 49.08 | 45.08 | 43.08 | 44.58 |
| C | PCCD | | 50.00 | 45.00 | 42.00 | 45.00 | 49.50 | 40.48 | 48.50 | 43.50 | 45.50 | 49.50 | 51.50 | 45.00 |
| D | MBABS | | | | | | 1.00 | 1.00 | 3.00 | 5.00 | 5.00 | 5.00 | 5.00 | 10.00 |
| | ABS P60 | | | 10.00 | | | | | | | | | | |
| | ABS A440 | | | | 20.00 | | | | | | | | | |
| | MBS M732 | | | | | 10.00 | | | | | | | | |
| H₃PO₃ | | | 0.02 | 0.02 | 0.02 | 0.02 | 0.02 | 0.02 | 0.02 | 0.02 | 0.02 | 0.02 | 0.02 | 0.02 |
| PETS | | | 0.3 | 0.3 | 0.3 | 0.3 | 0.3 | 0.3 | 0.3 | 0.3 | 0.3 | 0.3 | 0.3 | 0.3 |
| Irganox B900 | | | 0.1 | 0.1 | 0.1 | 0.1 | 0.1 | 0.1 | 0.1 | 0.1 | 0.1 | 0.1 | 0.1 | 0.1 |
| rvalue | | 0 | 0 | 0 | 0 | 0 | 0.7 | 29.8 | 2.2 | 44.8 | 18.6 | 0.2 | 8.2 | 7.3 |
| T_{Vicat}(°C) | | 148 | 101 | 100 | 101 | 111 | 108 | 110 | 103 | 106 | 104 | 101 | 98.5 | 99.8 |
| Light transmittance (%) | | 89.8 | 88.1 | 52.6 | 76.0 | 67.7 | 88.2 | 88.4 | 87.6 | 87.3 | 89.1 | 88.4 | 88.4 | 86.4 |
| Haze (%) | | 0.4 | 1.8 | 96.0 | 55.8 | 71.3 | 1.4 | 1.3 | 2.0 | 5.6 | 3.0 | 1.5 | 2.3 | 3.7 |
| Birefringence score | | 1.0 | 2.0 | NA | NA | NA | 3.0 | 3.0 | 3.0 | 4.0 | 5.0 | 4.0 | 4.0 | 4.0 |

| | | | | | | | | | | | | | | |
|---|---|---|---|---|---|---|---|---|---|---|---|---|---|---|
| NA: the composition is not transparent, therefore the birefringence is not evaluated. | | | | | | | | | | | | | | |

It can be seen from Table 1 that a neat linear polycarbonate resin of comparative example 1 has a high light transmittance and a low haze, but its birefringence score is low.

Composition of comparative example 2 not comprising MBABS has a high light transmittance and a low haze, but its birefringence score is low.

Compositions of comparative examples 3 and 4 comprise ABS instead of MBABS has a low light transmittance and a high haze.

Composition of comparative example 5 comprise MBS instead of MBABS has a low light transmittance and a high haze.

Composition of comparative example 6 having a *r* value over 32 does not have a high light transmittance and a low haze.

Compositions of invention examples 1-7 have a high light transmittance and a low haze as well as a low birefringence.

### Comparative Examples (CE) 7-11 and Invention Examples (IE) 8-14

Similarly, the materials listed in Table 2 were compounded, the properties of the compositions obtained were tested and the results were summarized in Table 2.

It can be seen from Table 2 that compositions of comparative examples 7-11 having a *r* value over 32 has a high haze.

Compositions of invention examples 8-14 have a high light transmittance and a low haze as well as a low birefringence.

**Table 2**

| Components | | CE7 | CE8 | IE8 | IE9 | CE9 | CE10 | IE10 | IE11 | CE11 | IE12 | IE13 | IE14 |
|---|---|---|---|---|---|---|---|---|---|---|---|---|---|
| A | PC | 46.08 | 44.08 | 42.08 | 40.08 | 38.08 | 41.58 | 39.58 | 37.58 | 35.58 | 34.58 | 29.58 | 24.58 |
| C | PCCD | 38.50 | 40.50 | 42.50 | 44.50 | 46.50 | 38.00 | 40.00 | 42.00 | 44.00 | 35.00 | 30.00 | 25.00 |
| D | MBABS | 15.00 | 15.00 | 15.00 | 15.00 | 15.00 | 20.00 | 20.00 | 20.00 | 20.00 | 30.00 | 40.00 | 50.00 |
| H₃PO₃ | | 0.02 | 0.02 | 0.02 | 0.02 | 0.02 | 0.02 | 0.02 | 0.02 | 0.02 | 0.02 | 0.02 | 0.02 |
| PETS | | 0.3 | 0.3 | 0.3 | 0.3 | 0.3 | 0.3 | 0.3 | 0.3 | 0.3 | 0.3 | 0.3 | 0.3 |
| Irganox B900 | | 0.1 | 0.1 | 0.1 | 0.1 | 0.1 | 0.1 | 0.1 | 0.1 | 0.1 | 0.1 | 0.1 | 0.1 |
| *r* value | | 156.9 | 62.4 | 10.7 | 1.8 | 35.7 | 88.8 | 14.0 | 3.7 | 57.8 | 20.1 | 25.2 | 28.7 |
| T_{Vicat}(°C) | | 105 | 103 | 101 | 97.6 | 97.7 | 100 | 98.8 | 99.1 | 96.7 | 98.0 | 96.6 | 94.0 |
| Light transmittance(%) | | 85.6 | 87.3 | 88.97 | 87.1 | 88.01 | 86.61 | 87.80 | 89.73 | 89.28 | 89.37 | 87.83 | 89.04 |
| Haze (%) | | 16.0 | 6.2 | 2.4 | 2.9 | 7.67 | 9.93 | 4.15 | 2.83 | 8.72 | 3.13 | 3.38 | 3.22 |
| Birefringence score | | 4.5 | 4.5 | 4.5 | 4.5 | 5.0 | 5.0 | 5.0 | 5.0 | 5.0 | 5.0 | 5.0 | 5.0 |

### Comparative Examples (CE) 12-13 and Invention Examples (IE) 15-30

Similarly, the materials listed in Table 3 were compounded, the properties of the compositions obtained were tested and the results were summarized in Table 3.

It can be seen from Table 3 that compositions of comparative examples 12-13 having a *r* value over 32 has a high haze.

Compositions of invention examples 15-30 have a high light transmittance and a low haze as well as a low birefringence.

**Table 3**

| Components | | IE15 | IE16 | IE17 | IE18 | IE19 | IE20 | IE21 | CE12 | CE13 | IE22 | IE23 | IE24 | IE25 | IE26 | IE27 | IE28 | IE29 | IE30 |
|---|---|---|---|---|---|---|---|---|---|---|---|---|---|---|---|---|---|---|---|
| A | CoPC-1 | | | | | | | | | | | 46.00 | | | | | 75.58 | 31.58 | 24.58 |
| | CoPC-2 | 31.50 | 30.50 | 28.50 | 28.50 | 29.50 | 27.5 | 25.50 | 27.50 | 26.50 | 46.88 | 7.58 | 43.38 | 38.08 | 33.08 | 27.58 | | | |
| B | M2400 | 20.08 | 20.08 | 21.08 | 18.08 | 14.08 | 16.08 | 18.08 | 20.08 | 15.08 | | | | | | | | | |
| C | PCCD | 47.00 | 46.00 | 45.00 | 43.00 | 41.00 | 41.00 | 41.00 | 37.00 | 43.00 | 37.70 | 31.00 | 36.00 | 31.50 | 26.50 | 22.00 | 23.00 | 18.0 | 15.0 |
| D | MBABS | 1.00 | 3.00 | 5.00 | 10.00 | 15.00 | 15.00 | 15.00 | 15.00 | 15.00 | 15.00 | 15.00 | 20.00 | 30.00 | 40.00 | 50.00 | 1.00 | 50.0 | 60.0 |
| H₃PO₃ | | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 |
| PETS | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Irganox B900 | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| *r* value | | 0.1 | 0.3 | 0.2 | 2.7 | 15.0 | 10.0 | 5.9 | 37.1 | 145.1 | 6.3 | 6.1 | 19.1 | 26.7 | 14.7 | 15.7 | 29.8 | 9.2 | 2.1 |
| T_{Vicat}(°C) | | 115 | 115 | 114 | 113 | 113 | 112 | 111 | 116 | 108 | 122 | 139 | 116 | 113 | 106 | 99.7 | 169 | 118 | 111 |
| Light transmittance(%) | | 89.6 | 89.9 | 89.4 | 89.3 | 89.2 | 89.4 | 88.7 | 88.1 | 86.6 | 89.0 | 88.0 | 88.8 | 88.0 | 89.4 | 89.1 | 89.3 | 88.5 | 88.4 |
| Haze (%) | | 0.7 | 0.8 | 1.0 | 1.4 | 2.5 | 2.1 | 2.2 | 5.6 | 11.8 | 2.5 | 2.8 | 2.7 | 3.5 | 3.4 | 3.1 | 3.8 | 4.0 | 4.6 |
| Birefringence score | | 3.0 | 3.0 | 3.0 | 3.0 | 4.0 | 4.0 | 4.0 | 4.0 | 4.0 | 4.0 | 4.0 | 5.0 | 5.0 | 5.0 | 5.0 | 3.0 | 5.0 | 5.0 |

## Claims

1. A polycarbonate composition comprising the following components, relative to the total weight of the composition:
A) 0-76 wt.% of a copolycarbonate containing bis(4-hydroxyphenyl)-3,3,5-trimethylcyclohexane units and substituted or unsubstituted bisphenol units,
B) 0-58 wt.% of an aromatic linear homopolycarbonate comprising substituted or unsubstituted bisphenol units,
C) 15-52 wt.% of poly(1,4-cyclohexylenedimethylene 1,4-cyclohexanedicarboxylate), and
D) 1-60 wt.% of methyl methacrylate -n-butyl acrylate -butadiene - styrene copolymer,
wherein the content relationship index (r) of components A-D, having the following formula (A): $r = {\left(\frac{1.585 ∗ \left({C}_{A + B}-0.000163∗{BPTMC%}_{A}∗{C}_{A}\right) + 1.507 ∗ {C}_{C}}{1.5445 ∗ {C}_{A + B + C}}-1\right)}^{2} ∗ {c}_{D} ∗ {10}^{6}$ (A) is in a range of 0-32,
in formula (A),
C_{A} indicates the content of component A in the composition,
C_{A+B} indicates the total content of components A and B in the composition, which is from 22 wt% to 76 wt%,
BPTMC%_{A} indicates the content of bis(4-hydroxyphenyl)-3,3,5-trimethylcyclohexane (BPTMC) units in component A,
C_{C} indicate the content of component C in the composition,
C_{A+B+C} indicates the total content of components A, B, and
C in the composition,
C_{D} indicate the content of component D in the composition,
all contents are weight percentage.

2. The composition according to claim 1, wherein the copolycarbonate comprises
i) bis(4-hydroxyphenyl)-3,3,5-trimethylcyclohexane units of formula (1) 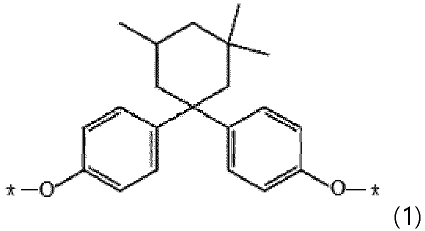 wherein * indicates the position where formula (1) is connected to the polymer chain, and
ii) substituted or unsubstituted bisphenol units of formula (2): 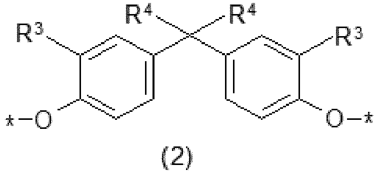 wherein
* indicates the position where formula (2) is connected to the polymer chain,
R³, each independently, is H, linear or branched C₁-C₁₀ alkyl, preferably, H, linear or branched C₁-C₄ alkyl, and
R⁴, each independently, is linear or branched C₁-C₁₀ alkyl, preferably linear or branched C₁-C₄ alkyl.

3. The composition according to claim 2, wherein the units of formula (1) in the copolycarbonate are derived from bis(4-hydroxyphenyl)-3,3,5-trimethylcyclohexane and the units of formula (2) in the copolycarbonate are derived from bisphenol A.

4. The composition according to claim 2 or 3, wherein the mole content of the units of the formula (1) in the copolycarbonate is 20-80 mol %, the mole content of the units of the formula (2) in the copolycarbonate is 80 - 20 mol %, based on the total mole number of units of formula (1) and formula (2), preferably, the mole content of the units of the formula (1) in the copolycarbonate is 30-75 mol %, the mole content of the units of the formula (2) in the copolycarbonate is 70 - 25 mol %, based on the total mole number of units of formula (1) and formula (2).

5. The composition according to any of claims 1-4, wherein the copolycarbonate is present in an amount ranging from 5 wt. % to 60 wt. %, preferably from 7 wt. % to 50 wt. %, relative to the total weight of the composition.

6. The composition according to any of claims 1-5, wherein the homopolycarbonate comprises units of formula (2) as defined in claim 2 or 3.

7. The composition according to any of claims 1-6, wherein the homopolycarbonate is present in an amount ranging from 14 wt. % to 60 wt. %, preferably from 14 wt. % to 58 wt. %, relative to the total weight of the composition.

8. The composition according to any of claims 1-7, wherein the poly(1,4-cyclohexylenedimethylene 1,4-cyclohexanedicarboxylate) has a weight average molecular weight of 30,000 to 80,000, preferably 41,000 to 60,000 as determined by GPC performed on a Perkin-Elmer instrument using 3% isopropanol/chloroform eluent and a refractive index of 1.506 to 1.508 as determined in accordance to ISO 489 with an Abbe Refractometer at the Sodium-D-Line (of wavelength 589nm).

9. The composition according to any of claims 1-8, wherein the methyl methacrylate -n-butyl acrylate -butadiene -styrene copolymer comprises from 1 to 15 wt.% of a dispersed phase made of a rubber-like elastic material and from 99 to 85 wt.% of a continuous phase made of a polymer comprising from 35 to 75 wt. % of styrene units and from 65 to 25 wt. % of a combination of methyl methacrylate units and n-butyl acrylate units, wherein the weight ratio of methyl methacrylate units to n-butyl acrylate units is 6:1 to 7:1, the elastic material is a styrene-butadiene block copolymer comprising from 30 to 50 wt. % of styrene monomer units and from 70 to 50 wt. % of butadiene monomer units.

10. The composition according to any of claims 1-9, wherein the methyl methacrylate -n-butyl acrylate-butadiene -styrene copolymer is present in an amount ranging from 3 wt.% to 50 wt.%, more preferably from 3 wt.% to 40 wt%, relative to the total weight of the composition.

11. The composition according to any of claims 1-10, wherein the total amount of the components A-D is up to 98 wt. %, preferably up 98.5 wt. %, more preferably up to 99 wt.%, relative to the total weight of the composition.

12. A shaped article made from the composition according to any of claims 1 to 11.

13. A process for preparing the shaped article according to claim 12, comprising injection moulding, extrusion moulding, blow moulding or thermoforming the polycarbonate composition according to any of claims 1 to 11.

## Patentansprüche

1. Polycarbonatzusammensetzung, umfassend die folgenden Komponenten, bezogen auf das Gesamtgewicht der Zusammensetzung:
A) 0-76 Gew.-% eines Copolycarbonats, das Bis(4-hydroxyphenyl)-3,3,5-trimethylcyclohexaneinheiten und substituierte oder unsubstituierte Bisphenoleinheiten enthält,
B) 0-58 Gew.-% eines aromatischen linearen Homopolycarbonats, das substituierte oder unsubstituierte Bisphenoleinheiten umfasst,
C) 15-52 Gew.-% Poly(1,4-cyclohexylendimethylen-1,4-cyclohexandicarboxylat) und
D) 1-60 Gew.-% Methylmethacrylat-n-Butylacrylat-Butadien-Styrol-Copolymer,
wobei der Gehaltsbeziehungsindex (r) der Komponenten A-D mit der folgenden Formel (A): $r = {\left(\frac{1.585 ∗ \left({C}_{A + B}-0.000163∗{BPTMC%}_{A}∗{C}_{A}\right) + 1.507 ∗ {C}_{C}}{1.5445 ∗ {C}_{A + B + C}}-1\right)}^{2} ∗ {c}_{D} ∗ {10}^{6}$ (A)
im Bereich von 0-32 liegt,
in Formel (A)
C_{A} den Gehalt von Komponente A in der Zusammensetzung angibt,
C_{A+B} den Gesamtgehalt der Komponenten A und B in der Zusammensetzung angibt, der 22 Gew.-% bis 76 Gew.-% beträgt,
BPTMC%_{A} den Gehalt von Bis(4-hydroxyphenyl)-3,3,5-trimethylcyclohexan(BPTMC)-Einheiten in Komponente A angibt,
C_{C} den Gehalt von Komponente C in der Zusammensetzung angibt,
C_{A+B+C} den Gesamtgehalt der Komponenten A, B und C in der Zusammensetzung angibt,
C_{D} den Gehalt von Komponente D in der Zusammensetzung angibt,
alle Gehalte Gewichtsprozente sind.

2. Zusammensetzung nach Anspruch 1, wobei das Copolycarbonat Folgendes umfasst:
i) Bis(4-hydroxyphenyl)-3,3,5-trimethylcyclohexaneinheiten der Formel (1) 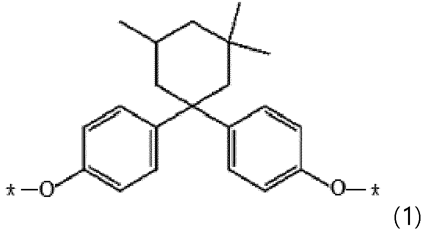 wobei * die Position anzeigt, an der Formel (1) an die Polymerkette gebunden ist, und
ii) substituierte oder unsubstituierte Bisphenoleinheiten der Formel (2): 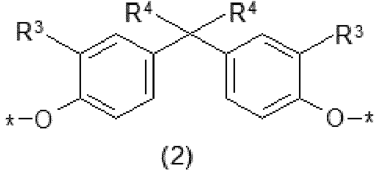 wobei
* die Position anzeigt, an der Formel (2) an die Polymerkette gebunden ist,
R³ jeweils unabhängig für H, lineares oder verzweigtes C₁-C₁₀-Alkyl, vorzugsweise H, lineares oder verzweigtes C₁-C₄-Alkyl, steht und
R⁴ jeweils unabhängig für lineares oder verzweigtes C₁-C₁₀-Alkyl, vorzugsweise lineares oder verzweigtes C₁-C₄-Alkyl, steht.

3. Zusammensetzung nach Anspruch 2, wobei sich die Einheiten der Formel (1) in dem Copolycarbonat von Bis(4-hydroxyphenyl)-3,3,5-trimethylcyclohexan ableiten und sich die Einheiten der Formel (2) in dem Copolycarbonat von Bisphenol A ableiten.

4. Zusammensetzung nach Anspruch 2 oder 3, wobei der molare Gehalt der Einheiten der Formel (1) in dem Copolycarbonat 20-80 Mol-% beträgt, der molare Gehalt der Einheiten der Formel (2) in dem Copolycarbonat 80 - 20 Mol-% beträgt, bezogen auf die gesamte Molzahl von Einheiten der Formel (1) und Formel (2), vorzugsweise der molare Gehalt der Einheiten der Formel (1) in dem Copolycarbonat 30-75 Mol-% beträgt, der molare Gehalt der Einheiten der Formel (2) in dem Copolycarbonat 70 - 25 Mol-% beträgt, bezogen auf die gesamte Molzahl von Einheiten der Formel (1) und Formel (2).

5. Zusammensetzung nach einem der Ansprüche 1-4, wobei das Copolycarbonat in einer Menge in dem Bereich von 5 Gew.-% bis 60 Gew.-%, vorzugsweise von 7 Gew.-% bis 50 Gew.-%, bezogen auf das Gesamtgewicht der Zusammensetzung, vorliegt.

6. Zusammensetzung nach einem der Ansprüche 1-5, wobei das Homopolycarbonat Einheiten der Formel (2) gemäß Anspruch 2 oder 3 umfasst.

7. Zusammensetzung nach einem der Ansprüche 1-6, wobei das Homopolycarbonat in einer Menge im Bereich von 14 Gew.-% bis 60 Gew.-%, vorzugsweise von 14 Gew.-% bis 58 Gew.-%, bezogen auf das Gesamtgewicht der Zusammensetzung, vorliegt.

8. Zusammensetzung nach einem der Ansprüche 1-7, wobei das Poly(1,4-cyclohexylendimethylen-1,4-cyclohexandicarboxylat) ein gewichtsmittleres Molekulargewicht von 30.000 bis 80.000, vorzugsweise 41.000 bis 60.000, gemäß Bestimmung durch GPC, die an einem Perkin-Elmer-Instrument unter Verwendung von 3 % Isopropanol/Chloroform als Elutionsmittel durchgeführt wird, und einen Brechungsindex von 1,506 bis 1,508 gemäß Bestimmung nach ISO 489 mit einem Abbe-Refraktometer bei der Natrium-D-Linie (mit einer Wellenlänge von 589 nm) aufweist.

9. Zusammensetzung nach einem der Ansprüche 1-8, wobei das Methylmethacrylat-n-Butylacrylat-Butadien-StyrolCopolymer 1 bis 15 Gew.-% einer dispergierten Phase aus einem kautschukartigen elastischen Material und 99 bis 85 Gew.-% einer kontinuierlichen Phase aus einem Polymer, das 35 bis 75 Gew.-% Styrol-Einheiten und 65 bis 25 Gew.- % einer Kombination von Methylmethacrylateinheiten und n-Butylacrylateinheiten umfasst, wobei das Gewichtsverhältnis von Methylmethacrylateinheiten zu n-Butylacrylateinheiten 6:1 bis 7:1 beträgt, umfasst, wobei es sich bei dem elastischen Material um ein StyrolButadien-Blockcopolymer handelt, das 30 bis 50 Gew.-% Styrolmonomereinheiten und 70 bis 50 Gew.-% Butadienmonomereinheiten umfasst.

10. Zusammensetzung nach einem der Ansprüche 1-9, wobei das Methylmethacrylat-n-Butylacrylat-Butadien-StyrolCopolymer in einer Menge in dem Bereich von 3 Gew.-% bis 50 Gew.-%, weiter bevorzugt von 3 Gew.-% bis 40 Gew.-%, bezogen auf das Gesamtgewicht der Zusammensetzung, vorliegt.

11. Zusammensetzung nach einem der Ansprüche 1-10, wobei die Gesamtmenge der Komponenten A-D bis zu 98 Gew.-%, vorzugsweise bis zu 98,5 Gew.-%, weiter bevorzugt bis zu 99 Gew.-%, bezogen auf das Gesamtgewicht der Zusammensetzung, beträgt.

12. Formkörper, hergestellt aus der Zusammensetzung nach einem der Ansprüche 1 bis 11.

13. Verfahren zur Herstellung des Formkörpers nach Anspruch 12, umfassend Spritzgießen, Extrudieren, Blasformen oder Thermoformen der Polycarbonatzusammensetzung nach einem der Ansprüche 1 bis 11.

## Revendications

1. Composition de polycarbonate comprenant les composants suivants, par rapport au poids total de la composition :
A) 0-76 % en poids d'un copolycarbonate contenant des motifs bis(4-hydroxyphényl)-3,3,5-triméthylcyclohexane et des motifs bisphénol substitué ou non substitué,
B) 0-58 % en poids d'un homopolycarbonate linéaire aromatique comprenant des motifs bisphénol substitué ou non substitué,
C) 15-52 % en poids de poly(1,4-cyclohexanedicarboxylate de 1,4-cyclohexylènediméthylène), et
D) 1-60 % en poids de copolymère méthacrylate de méthyle-acrylate de n-butyle-butadiène-styrène,
dans laquelle l'indice de relation de teneurs (r) des composantes A-D, ayant la formule suivante (A) : $r = {\left(\frac{1.585 ∗ \left({C}_{A + B}-0.000163∗{BPTMC%}_{A}∗{C}_{A}\right) + 1.507 ∗ {C}_{C}}{1.5445 ∗ {C}_{A + B + C}}-1\right)}^{2} ∗ {c}_{D} ∗ {10}^{6}$ (A) se situe dans une plage de 0 à 32,
dans la formule (A),
C_{A} indique la teneur en composant A dans la composition, C_{A+B} indique la teneur totale en composants A et B dans la composition, qui est de 22 % en poids à 76 % en poids, BPTMC%_{A} indique la teneur en motifs bis (4-hydroxyphényl)-3,3,5-triméthylcyclohexane (BPTMC) dans le composant A, C_{C} indique la teneur en composant C dans la composition, C_{A+B+C} indique la teneur totale en composants A, B, et C dans la composition,
C_{D} indique la teneur en composant D dans la composition, toutes les teneurs sont un pourcentage en poids.

2. Composition selon la revendication 1, dans laquelle le copolycarbonate comprend
i) des motifs bis(4-hydroxyphényl)-3,3,5-triméthylcyclohexane de formule (1) 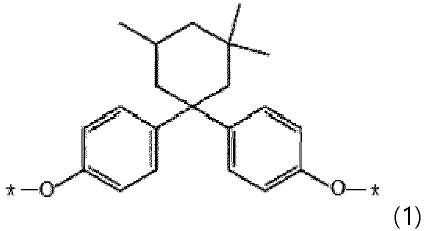 dans laquelle * indique la position où la formule (1) est reliée à la chaîne de polymère, et
ii) les motifs bisphénol substitué ou non substitué de formule (2) : 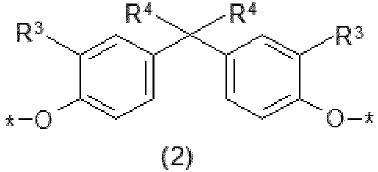 dans laquelle
* indique la position où la formule (2) est reliée à la chaîne de polymère,
R³, chacun indépendamment, est H, alkyle en C₁-C₁₀ linéaire ou ramifié, de préférence H, alkyle en C₁-C₄ linéaire ou ramifié, et
R⁴, chacun indépendamment, est alkyle en C₁-C₁₀ linéaire ou ramifié, de préférence alkyle en C₁-C₄ linéaire ou ramifié.

3. Composition selon la revendication 2, dans laquelle les motifs de formule (1) dans le copolycarbonate sont dérivés du bis(4-hydroxyphényl)-3,3,5-triméthylcyclohexane et les motifs de formule (2) dans le copolycarbonate sont dérivés du bisphénol A.

4. Composition selon la revendication 2 ou 3, dans laquelle la teneur en moles des motifs de formule (1) dans le copolycarbonate est de 20-80 % en moles, la teneur en moles des motifs de formule (2) dans le copolycarbonate est de 80-20 % en moles, par rapport au nombre total de moles de motifs de formule (1) et de formule (2), de préférence, la teneur en moles des motifs de formule (1) dans le copolycarbonate est de 30-75 % en moles, la teneur en moles des motifs de formule (2) dans le copolycarbonate est de 70-25 % en moles, par rapport au nombre total de moles de motifs de formule (1) et de formule (2).

5. Composition selon l'une quelconque des revendications 1 à 4, dans laquelle le copolycarbonate est présent en une quantité allant de 5 % en poids à 60 % en poids, de préférence de 7 % en poids à 50 % en poids, par rapport au poids total de la composition.

6. Composition selon l'une quelconque des revendications 1 à 5, dans laquelle l'homopolycarbonate comprend des motifs de formule (2) tels que définis dans la revendication 2 ou 3.

7. Composition selon l'une quelconque des revendications 1 à 6, dans laquelle l'homopolycarbonate est présent en une quantité allant de 14 % en poids à 60 % en poids, de préférence de 14 % en poids à 58 % en poids, par rapport au poids total de la composition.

8. Composition selon l'une quelconque des revendications 1 à 7, dans laquelle le poly(1,4-cyclohexanedicarboxylate de 1,4-cyclohexylènediméthylène) a un poids moléculaire moyen en poids de 30 000 à 80 000, de préférence de 41 000 à 60 000 tel que déterminé par GPC effectuée sur un appareil Perkin-Elmer en utilisant un éluant isopropanol/chloroforme à 3 % et un indice de réfraction de 1,506 à 1,508 tel que déterminé conformément à la norme ISO 489 avec un réfractomètre Abbe à la ligne D du sodium (d'une longueur d'onde 589 nm).

9. Composition selon l'une quelconque des revendications 1 à 8, dans laquelle le copolymère méthacrylate de méthyle-acrylate de n-butyle-butadiène-styrène comprend de 1 à 15 % en poids d'une phase dispersée composée d'un matériau élastique analogue à du caoutchouc et de 99 à 85 % en poids d'une phase continue composée d'un polymère comprenant de 35 à 75 % en poids de motifs de styrène et de 65 à 25 % en poids d'une combinaison de motifs de méthacrylate de méthyle et de motifs d'acrylate de n-butyle, dans laquelle le rapport pondéral des motifs de méthacrylate de méthyle sur les motifs d'acrylate de n-butyle est de 6:1 à 7:1, le matériau élastique est un copolymère à blocs styrène-butadiène comprenant de 30 à 50 % en poids de motifs monomériques de styrène et de 70 à 50 % en poids de motifs monomériques de butadiène.

10. Composition selon l'une quelconque des revendications 1 à 9, dans laquelle le copolymère de méthacrylate de méthyle-acrylate de n-butyle-butadiène-styrène est présent en une quantité allant de 3 % en poids à 50 % en poids, plus préférablement de 3 % en poids à 40 % en poids, par rapport au poids total de la composition.

11. Composition selon l'une quelconque des revendications 1 à 10, dans laquelle la quantité totale des composants A-D va jusqu'à 98 % en poids, de préférence jusqu'à 98,5 % en poids, plus préférablement jusqu'à 99 % en poids, par rapport au poids total de la composition.

12. Article façonné fabriqué à partir de la composition selon l'une quelconque des revendications 1 à 11.

13. Procédé pour la préparation de l'article façonné selon la revendication 12, comprenant un moulage par injection, un moulage par extrusion, un moulage par soufflage ou un thermoformage de la composition de polycarbonate selon l'une quelconque des revendications 1 à 11.
